Europäisches Patentamt

European Patent Office

Office européen des brevets

(19)

(11) Veröffentlichungsnummer: **0 039 790**
**A1**

## (12) EUROPÄISCHE PATENTANMELDUNG

(21) Anmeldenummer: 81102725.9

(22) Anmeldetag: 10.04.81

(51) Int. Cl.³: **G 01 N 11/14**

(30) Priorität: 12.05.80 CH 3696/80

(43) Veröffentlichungstag der Anmeldung:
18.11.81 Patentblatt 81/46

(84) Benannte Vertragsstaaten:
CH DE FR GB LI

(71) Anmelder: CONTRAVES AG
Schaffhauserstrasse 580
CH-8052 Zürich(CH)

(72) Erfinder: Zemp, Georg
Friedheimstrasse 26
CH-8057 Zürich(CH)

(54) Rotationsrheometer mit Heizeinrichtung.

(57) Am Rotationsrheometer (5) ist ein vorzugsweise als Ringstrahler ausgebildeter Wärmestrahler (20) auf einen Messkegel (30) gerichtet. Die Oberfläche (31) des Messkegels ist durch Dunkelfärbung und durch Rillen oder Poren besonders strahlenabsorbierend ausgebildet. Nach einer weiteren Ausführung ist mindestens ein punktförmig strahlender Wärmestrahler (24,25) am Rotationsrheometer oder an einem freistehenden Stativ (26) befestigt.

FIG. 1

EP 0 039 790 A1

## Rotationsrheometer mit Heizeinrichtung

Die Erfindung betrifft ein Rotationsrheometer mit zwei rotationssymmetrischen, mit je einer Messfläche versehenen Messteilen sowie einer Heizeinrichtung zur Temperierung der zwischen den Messflächen befindlichen Messubstanz.

Um die rheologischen Eigenschaften einer Substanz mit einem Rotationsrheometer zu messen, wird die Messubstanz zwischen die beiden konzentrisch übereinander angeordneten Messflächen gebracht. Diese werden anschliessend soweit angenähert, bis die Messubstanz als dünne Schicht zwischen den beiden Messflächen liegt. Werden diese nun relativ zueinander bewegt, so entstehen in der Messubstanz Tangential- und Normalkräfte, die auf die Messteile übertragen werden und durch Torsionsfedern, Biegebalken oder ähnliche Messeinrichtungen gemessen werden.

Die rheologischen Eigenschaften sind stark temperaturabhängig. Um exakte und reproduzierbare Messresultate zu erhalten, müssen die Messubstanzen deshalb auf eine bestimmte Temperatur gebracht und dort konstant gehalten werden. Bei bekannten Rotationsrheometern sind deshalb beide Messteile von Temperierkammern umgeben, die zur Präparation als auch zum Reinigen der Messflächen geöffnet oder entfernt werden müssen.

So ist durch die DE-B-27 33 099 eine Heizvorrichtung für ein Rotationsrheometer bekannt, bei dem die Temperierung durch eine im wesentlichen als Flüssigkeitsbad ausgeführte Temperierkammer erfolgt. Die ringförmige Temperierkammer umschliesst die in einer zylindrischen Vertiefung befindliche Messubstanz.

Zur Messung als auch zur Reinigung muss eine Vorrichtung zur Normalkraftmessung unten an der Temperierkammer an- bzw. abgeschraubt werden. Die Durchführung von Messungen mit einem Rotationsrheometer in Verbindung mit dieser Heizvorrichtung ist zeit- und arbeitsintensiv. Weiter ist nachteilig, dass während der Messung die Messubstanz optisch nicht beobachtet werden kann.

Hiervon ausgehend stellt sich für die vorliegende Erfindung die Aufgabe, ein Rotationsrheometer zu entwickeln, das mit einfachen Mitteln die Messflächen in der Einfüllstellung und die Messubstanz während dem Messvorgang wirksam temperiert, eine direkte optische Beobachtung der Messubstanz während dem Messvorgang erlaubt und ohne zusätzliche Arbeitsvorgänge das Einfüllen der Messubstanz und die Reinigung der Messflächen ermöglicht.

Die Aufgabe wird dadurch gelöst, dass die Heizeinrichtung einen Wärmestrahler aufweist und mindestens ein Teil der Oberfläche des einen Messteils bestrahlt wird.

Die erfindungsgemässe Heizvorrichtung hat den Vorteil, dass beide Messteile schon in der Einfüllstellung beheizt werden können, und dass sowohl zum Einfüllen als auch zum Reinigen keine Teile demontiert werden müssen. Weitere Vorteile ergeben sich aus den Unteransprüchen.

Die Erfindung wird nun anhand der Zeichnung näher erläutert.

Es zeigen:

Fig. 1 eine Seitenansicht, teilweise im Schnitt, eines Rotationsrheometers mit der erfindungsgemässen Heizvorrichtung,

Fig. 2 ein schematisch und nur teilweise gezeichnetes Rotationsrheometer in der Einfüllstellung sowie die erfindungsgemässe Heizeinrichtung,

Fig. 3 ein schematisch und nur teilweise gezeichnetes Rotationsrheometer mit einem am Gehäuse befestigten Wärmestrahler,

Fig. 4 ein schematisch und nur teilweise gezeichnetes Rotationsrheometer und ein davon getrennt an einem Stativ befestigter Wärmestrahler.

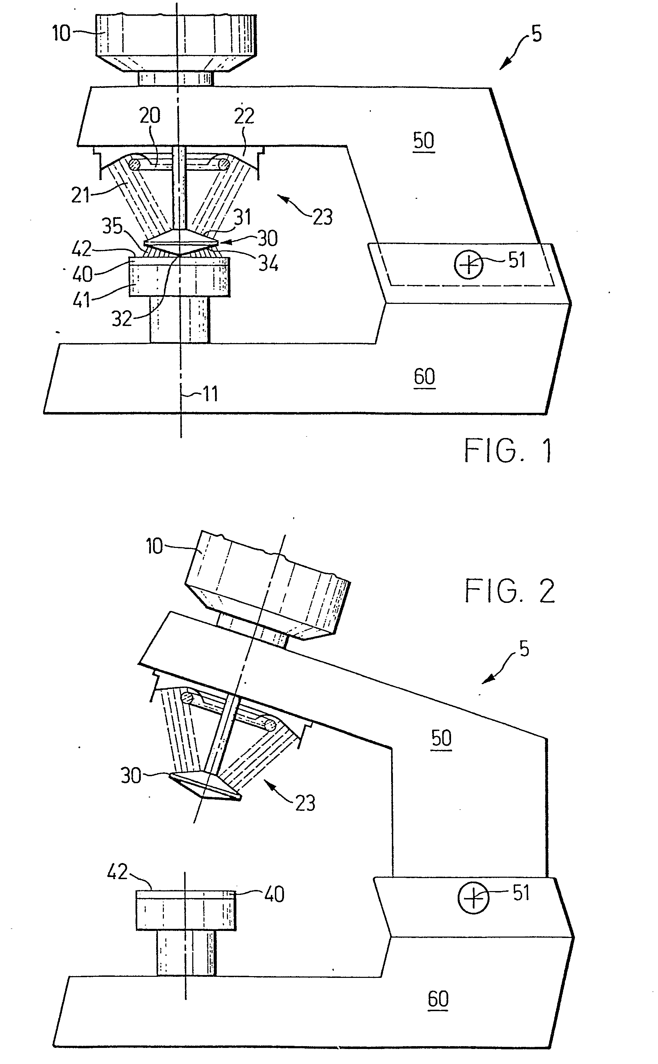

Die Fig. 1 zeigt ein Rotationsrheometer 5 nach dem Konus-Platte-Prinzip, ausgerüstet mit der erfindungsgemässen Heizvorrichtung 23 nach Anspruch 1, welche aus einem Ringstrahler 20, einem Reflektor 22 sowie dem Messkegel 30 besteht.

Die Messplatte 40 ist mit einer an sich bekannten unteren Heizvorrichtung 41 konzentrisch zur Drehachse 11 auf dem Gerätefuss 60 befestigt. Der Messkegel 30 ist, ebenfalls konzentrisch zur Drehachse 11, am Tragarm 50 drehbar gelagert. Die leicht konisch geformte Messfläche 34 des Messkegels 30 liegt mit ihrer Spitze 32 auf der Messplatte 40 auf. Die Messubstanz 35 befindet sich zwischen der ebenen Messfläche 42 der Messplatte 40 und der konischen Messfläche 34 des Messkegels 30. Auf dem Tragarm 50 befindet sich die Antriebs- und Drehmoment-Messvorrichtung 10.

Unterhalb des Tragarms 50 ist konzentrisch zur Drehachse 11 der Reflektor 22 und der Ringstrahler 20 befestigt. Als Ringstrahler 20 kann jeder Strahlungskörper verwendet werden, der eine elektromagnetische Strahlung aussendet, die hinreichend intensiv ist, so dass ihre Wirkung in einer Wärmeerzeugung und -übertragung besteht. Solche Strahlungskörper enthalten beispielsweise freiliegende, bei Betrieb rotglühende Heizspiralen oder in Rohre oder keramischen Massen eingebettete Heizdrähte. Der Reflektor 22 besteht beispielsweise aus einem hochglanzpolierten Metall, das die Wärmestrahlung 21 gezielt auf die Oberfläche 31 des Messkegels 30 lenkt. Der Messkegel 30 absorbiert die Wärmestrahlung 21 eines Strahlers besonders wirksam, wenn seine Oberfläche 31 dunkel ist und durch Rauhigkeit, z.B. durch Rillen oder Poren vergrössert wird.

Die Fig. 2 zeigt das Rotationsrheometer mit der erfindungsgemässen Heizvorrichtung 23 in der Einfüllstellung. Um diese Stellung zu erreichen, wird der Tragarm 50 um die Drehachse 51 (Fig. 1) nach oben geschwenkt. Die Heizvorrichtung 23 bleibt auch in der Einfüllstellung am Tragarm 50 befestigt und kann den Messkegel 30 beziehungsweise die Messfläche 42 ohne Unterbrechung temperieren. Gut ersichtlich ist, dass die Messplatte 40 zum Einfüllen der Messubstanz als auch zum Reinigen von allen Seiten gut zugänglich ist.

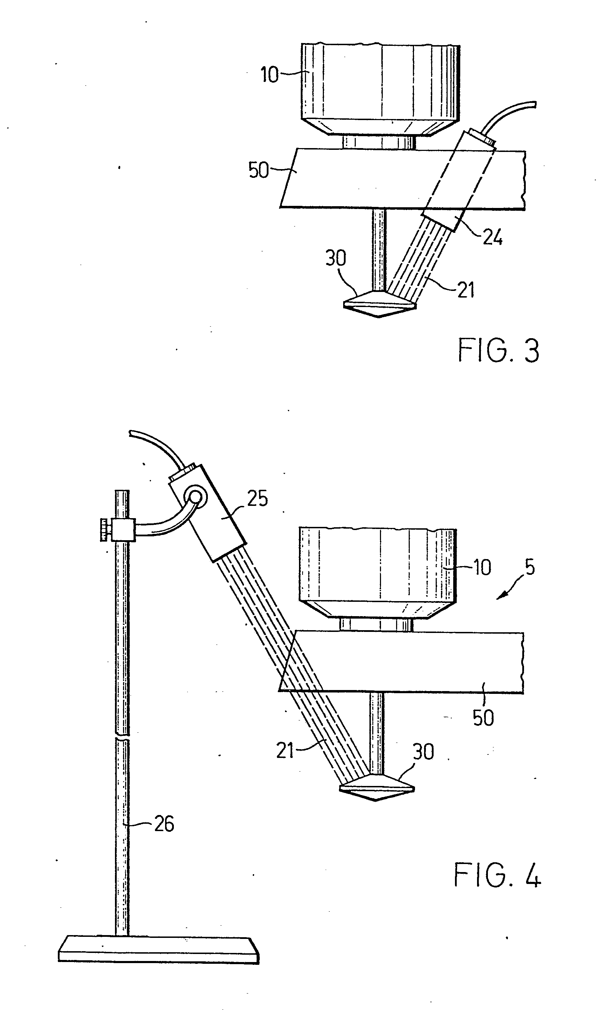

Die Figur 3 zeigt das Rotationsrheometer nach Anspruch 3. Der Wärmestrahler kann am Tragarm 50 fixiert sein, vorteilhaft ist auch eine bezüglich der Lage zum Messteil variable Anordnung.

Die Fig. 4 zeigt eine weitere Ausführung der Erfindung nach Anspruch 3. Der vom Rheometer getrennt angeordnete Wärmestrahler 25 ist an einem Stativ 26 befestigt, das in seiner Lage zum bestrahlten Messteil 30 verändert werden kann.

Patentansprüche

1. Rotationsrheometer (5) mit zwei rotationssymmetrischen, mit je einer Messfläche versehenen Messteilen (30, 40) sowie einer Heizeinrichtung zur Temperierung der zwischen den Messflächen (34, 42) befindlichen Messubstanz (35), dadurch gekennzeichnet, dass die Heizeinrichtung einen Wärmestrahler (20) aufweist und mindestens ein Teil der Oberfläche des einen Messteils (30 beziehungsweise 40) bestrahlt wird.

2. Rotationsrheometer nach Anspruch 1, dadurch gekennzeichnet, dass der Wärmestrahler (20) ein Ringstrahler ist, der konzentrisch zur Drehachse des einen Messteils (30 beziehungsweise 40) am Rotationsrheometer (5) angeordnet ist.

3. Rotationsrheometer (5) nach Anspruch 1, dadurch gekennzeichnet, dass mindestens ein, im wesentlichen punktförmiger Wärmestrahler (24) am Rotationsrheometer (5) angeordnet ist.

4. Rotationsrheometer (5) nach Anspruch 1, dadurch gekennzeichnet, dass mindestens ein Wärmestrahler (25) im Abstand zum Rheometer (5) an einem Stativ (26) angeordnet ist.

5. Rotationsrheometer (5) nach den Ansprüchen 1 bis 3, dadurch gekennzeichnet, dass die bestrahlte Oberfläche durch Rauhigkeit sowie durch eine dunkle Färbung strahlenabsorbierend ausgebildet ist.

- 1/2 -

0039790

FIG. 1

FIG. 2

FIG. 3

FIG. 4

Europäisches
Patentamt

**EUROPÄISCHER RECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | G 01 N 11/14 |
| | FR - A - 2 370 971 (PROBIO DMS)<br>* Seite 5, Zeilen 19-24; Figur 2 *<br><br>-- | 1 | |
| A | FR - A - 1 313 508 (BAYER A.G.)<br>* Seite 2, linke Spalte, Zeilen 15-26; Figuren *<br><br>-- | 1 | |
| A | DE - A - 2 149 721 (W.O. SOMMER)<br>* Seite 5; Figur 3 *<br><br>-- | 1 | **RECHERCHIERTE SACHGEBIETE (Int. Cl.³)**<br><br>G 01 N 11/10<br>11/14<br>11/16 |
| A | DE - A - 2 326 256 (THE B.F. GOOD-RICH CO.)<br>* Seite 4, Zeilen 20-28; Seite 5, Zeilen 19-27; Figuren 4, 5 *<br><br>-- | 1 | |
| A | US - A - 3 307 619 (DAE SIK KIM)<br>* Spalte 3, Zeile 45 - Spalte 4, Zeile 15; Figur 1 *<br><br>-- | 1 | |
| A | DE - A - 2 330 964 (BRABENDER)<br>* Seite 3, Zeile 24 - Seite 4, Zeile 17; Figuren *<br><br>-- | 1 | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| DA | DE - B - 2 733 099 (BRABENDER)<br>* Spalte 4, Zeilen 23-35; Figur 1 *<br><br>---- | 1 | |

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-08-1981 | ANTHONY |

EPA form 1503.1   06.78